# EUROPEAN PATENT SPECIFICATION

(11) **EP 0 526 984 B1**
(45) Date of publication and mention of the grant of the patent: **31.03.1999**
(21) Application number: 92306072.7
(22) Date of filing: 01.07.1992
(51) Int. Cl.: B01J 35/04

(54) **Metallic catalyst support and production method thereof**
Metallischer Katalysatorträger und Verfahren zu seiner Herstellung
Support de catalyseur métallique et son procédé de fabrication

(30) Priority: 04.07.1991 JP 191077/91; 28.05.1992 JP 163550/92
(43) Date of publication of application: 10.02.1993
(60) Divisional application: 96100805.9
(73) Proprietor: MATSUMOTO KOKAN Co. Ltd., Amagasaki-shi, Hyogo-ken (JP)
(72) Inventor: Matsumoto, Hisao, Amagasaki-shi, Hyogo-ken (JP)
(74) Representative: Low, Peter John

(56) References cited:
- EP-A- 0 243 952
- EP-A- 0 245 738
- EP-A- 0 379 032
- DE-A- 3 515 681
- US-A- 4 220 625

## Description

### BACKGROUND OF THE INVENTION

### 1. Field of the invention

The present invention relates to a metallic catalyst support for use in supporting catalyst for combustion and, more particularly, to a metallic catalyst support composed of a heat resistant metal provided with characteristics as a catalyst support.

### 2. Description of the Prior Art

Hitherto, in one of environmental pollution control measures for automobiles, it has been conventional to interpose a ternary catalytic converter (catalytic converter rhodium) in a middle part of an exhaust pipe to purify exhaust gas.

A metallic support of honeycomb construction has been known as one of such catalyst supports used in the converter. This metallic catalyst support comprises a corrugated plate and a flat plate each formed of a foil having 0.05mm in thickness of heat resistant metal of 20Cr-5Al, said corrugated plate and flat plate being combined to form a core unit of multi-lager honeycomb construction by rolling or laminating them together.

To maintain the shape and construction of the core unit, joint portions between the corrugated plate and the flat plate have been conventionally joined by brazing, spot-welding or laser welding an open end face thereof.

In the brazing method used most popularly as one of the mentioned joining methods, however, there is a disadvantage that not only the solder itself is expensive but also cost of necessary equipments is high due to requirements such as vacuum, high temperature of not lower than 1000°C. Further, the brazing method is not always efficient taking much labor and time, and after all it may be said that this brazing is most expensive for manufacturing the core unit of honeycomb construction.

In the spot-welding or end face laser welding method, it becomes essential to apply a very precise welding to a plurality of portions of a foil of 0.05mm in thickness with a pitch of 2mm, thus these welding methods having not only a disadvantage of poor working efficiency but also that of less welding reliability.

Moreover, since in any of the mentioned conventional methods joining is partially carried out between one corrugated plate and another flat plate immediately adjacent to each other, if looking at the plurality of welded spots entirely, there arise disadvantages such that center part of the core unit may get out like a bamboo shoot or some joined portions may be separated due to repetition of thermal deformation under high temperature. To overcome the above disadvantages, a joining method has been proposed in which retainer protrusions are disposed alternately at several points of the corrugated plate and flat plate rolled together, as disclosed in Japanese Laid-Open Patent Publications (unexamined) Nos. 25321/1979 and 236949/1989 and Japanese Laid-Open Utility Model Registration Publication (unexamined) No. 136735/1988.

In the joining method proposed in these publications, the corrugated plate and flat plate are not directly joined, but only end part therebetween is joined, or relative part is in contact with the retainer protrusions only. Accordingly, as a result of sharp heating to high temperature, sharp cooling therefrom to low temperature and repetition of such sharp temperature change, the relative retainer parts come to loosen due to uneven expansion and shrinkage between the corrugated plate and flat plate, and moreover the corrugated plate and flat plate forming a core unit come to be vibrated and rubbed each other due to exhaust gas passing through at high speed, resulting in getting out of the catalyst support and after all declining the catalytic performance.

EPA 243952 describes a method for reinforcing a catalytic core unit by securing the corrugated plate and flat plate to a central shaft and thereafter welding rigid end supports to the ends of the shaft for preventing movement of the plates relative to each other. The end supports traverse the surface of the end faces of the core unit.

EPA 245738 describes the provision of a slit in a catalytic core unit and disposing a supporting wall therein. The plates of the core unit are secured to the support wall by welding along particular pre-determined seam lines.

A further attempt has been proposed in which principal part of a case or outer casing is provided with a stopper for preventing the core unit from getting out (Japanese Laid-Open Utility Model Registration Publication (unexamined) No. 78219/1989). However, any of these arrangement is not related to manufacturing and assembling of the core unit, but disclosed that a core unit is received in the outer casing provided with the mentioned stopper, and no technical advantage of overcoming the above problems, is disclosed.

### SUMMARY OF THE INVENTION

The present invention was made to solve the above-discussed problems pertinent to the known metallic catalyst support of this type and has an object easily providing an improved metallic. catalyst support assembly comprising a core unit of honeycomb construction formed by combining a corrugated plate with a flat plate, a corrugated plate with another corrugated place, etc. each plate being made of a heat resistant metal to perform as a catalyst support, and by rolling or laminating these plates for form a multi-layer core unit.

Another object of the invention is to provide a strong and stable joining method in the atmosphere without any expensive solder for vacuum brazing.

To accomplish the foregoing object, a metallic catalyst support in accordance with the present invention comprises a core unit of honeycomb construction formed by combining a corrugated plate with a flat plate, a corrugated plate with another corrugated plate, or either a corrugated plate or a flat plate with an exhaust passage member, each plate and member being made of a heat resistant metal, and by rolling or laminating them to form a multi-layer, the core unit having an indent in an axial direction across an end face opening of said core unit; characterized in that the plates located at the peripheral edges of said indent are caused to fall down sideways by the application of a load to the indent and a meltable bonding material is inserted in said indent whereby at least those plates located at the peripheral edges of the indent are joined by melting all or any part of said bonding material by a melting means. In said indented part, the corrugated unit and flat plate of said core unit are joined securely to each other by welding, deposition, buildup welding, brazing, flame coating or any other suitable joining means.

In accordance with a second aspect of the invention there is provided a method for manufacturing a metallic catalyst support having a core unit of honeycomb construction made of heat resistant metal comprising the steps of (a) forming a slit-like indent in axial direction of diametral line of an end face opening of a core unit by a cutting means, (b) causing honeycomb portions located at peripheral edge of the indent to fall down sideways by insertion of a meltable bonding material into the indent with or without the application of a load to the indent (c) joining at least the honeycomb portions located at the peripheral edge of said indent by melting all or any part of said bonding material by a melting means.

In accordance with a third aspect of the invention there is provided a metallic catalyst support comprising a core unit of honeycomb construction formed by combining a corrugated plate with a flat plate, a corrugated plate with another corrugated plate, or either a corrugated plate or a flat plate with an exhaust passage member, each plate and member being made of a heat resistant metal and by rolling or laminating them to form a multi-layer, the core unit having an indent in axial direction across an end face opening of said core unit; characterised in that the plate located at the peripheral edges of said indent are caused to fall down sideways by the application of a load to the indent and a bonding material having a brazing agent formed thereon is inserted in said indent whereby at least those plates located at the peripheral edges of the indent are joined by melting all or any part of brazing agent formed on said bonding material by a melting means.

Other objects, features and advantages of the present invention will become apparent in the course of the following description with reference to the accompanying drawings, in which:-
Fig.1(a) and (b) are schematic perspective views for explaining an example of catalyst support in which indented part is formed;
Fig. 2 is a simulation of an enlarged photograph of the catalyst of Example 1 taken from above;
Fig.3(a), (b) and (c) are schematic views for explaining examples of the corrugated plate and an example of the corrugated plates in a combined state; and
Figure 4 is a simulation of a photograph in which core unit of the invention is partially cut away.

Several embodiments of the present invention are hereinafter described in detail.

### [Example 1]

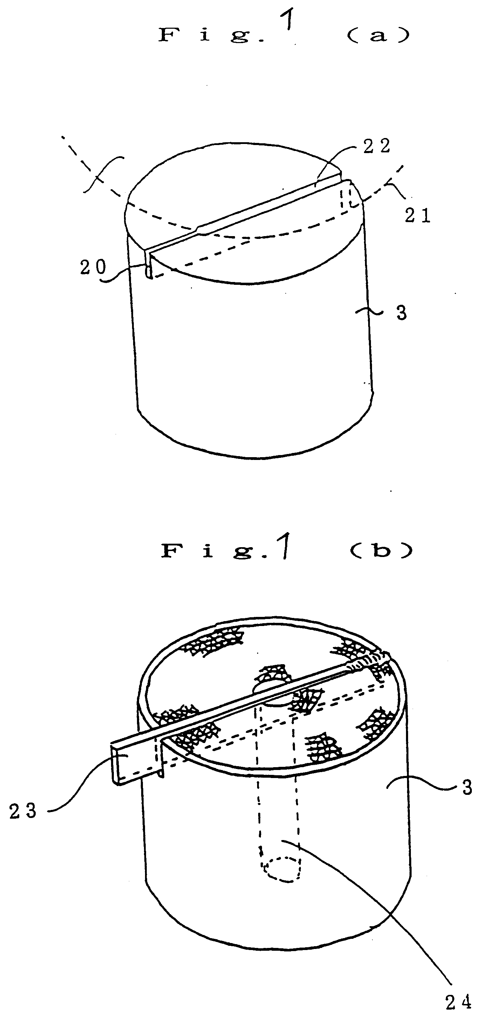

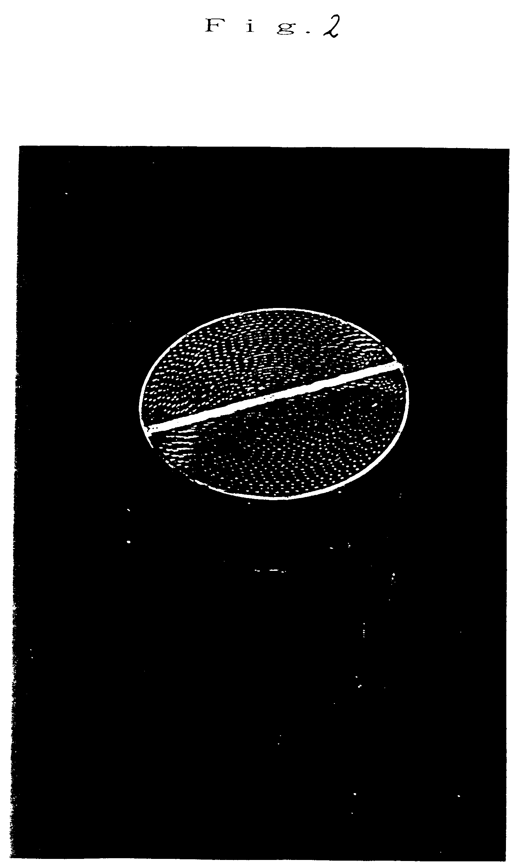

As shown in Figure 1(a), in the core unit of this example, an opening thereof is formed into a slit-like indent 20 of 16mm in depth by cutting in the axial direction of the core unit with a diamond grindstone 21 of 0.5mm in thickness and 200mm in diameter rotated at 2000 rpm. The formed indent is expanded or widened with an iron disc of 1.2mm in thickness coated with TiC, and a bonding material 23 according to SUS304 of 2mm in thickness and 14mm in width is inserted in the indent 20 in such a manner as to be higher than the end of the opening of the core unit by 0.7mm. Melting step of the inserted bonding material 23 is started from this higher part by irradiation with CO₂ laser to deposit the molten bonding material on the core unit 3 provided with the indent 20. The deposit conditions are 600W in output and 150mm/min. in speed. Figure 2 shows a simulation of an enlarged photograph of the metallic catalyst support of Example 1 taken from above.

Two ends of the bonding material 23 may be bonded to a case or outer casing and also with a core member 24. In this regard, the bonding material may be either of a substance of the same category as the outer casing or the core unit or of any other different base material.

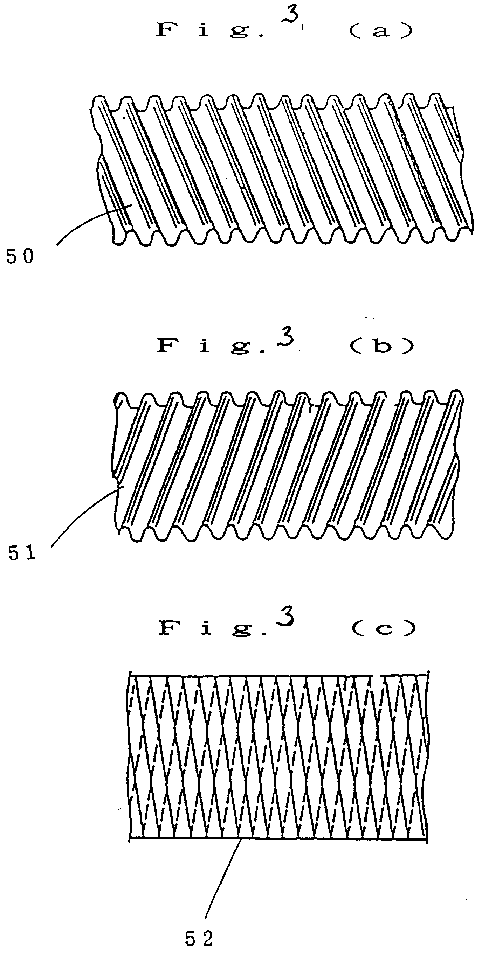

Though Figure 3(b) shows a bonding material longer than the core unit protruding from only one side thereof, it is also preferable that the bonding material protrudes from both sides of the core unit. In effect, utilizing the protruding part of the bonding material, it will be easy to position the melting part of the bonding material or move the entire core unit. It is further possible to bond such-protruding part of the bonding'material to the outer casing.

Though CO₂ laser is employed as welding means, it is also preferable to use electron beam, arc and other means.

As for the materials of the outer casing or case, materials according to JIS4305-SUS304, - SUS310, SUS430, and other appropriate materials are also applicable in place of the mentioned 20Cr-5Al.

### [Example 2]

In this example, a core unit is provided with a slit-like indent of 1mm in width and 12mm in depth by means of a cutting grindstone of 1mm in thickness. Then, a plate-like bonding material prepared according to SUS304 of 3mm in thickness and 9mm in width and which is larger than the indent is inserted in the indent by press fitting in such a manner as to be higher than the end face opening of the core unit by 0.7mm while widening the slit-like indent. Utilizing the press fitting, precision of engagement between the indent and bonding material is very easily achieved.

It is preferable that the mentioned plate-like bonding material employed in the foregoing Example has such a shape as suitable for easy melting by thermal energy of CO₂ laser and smooth flow-out of molten material in large amount to be deposited onto the indent. For that purpose, it is preferable that the bonding material is nail-shaped, i.e., T-shaped or Y-shaped, or the like.

### [Example 3]

In this example, a bonding material according to SUS304 of 1.2mm in thickness and 10mm in width is inserted in an indent widened by means of a disc of 2mm in thickness in the similar manner to Example 1. In this step, it is preferable that a thin film ribbon of about 25 micron composed of an amorphous brazing agent is attached to two sides of the bonding material. Then the bonding material is heated to 1130°C under vacuum or nitrogen atmosphere, whereby the molten brazing agent (i.e., amorphous thin film) is deposited in the space between the soldering material and the indent to achieve the brazing.

This brazing step is preferably carried out in a vacuum furnace, and it is also preferable to apply a high frequency induction heating to the bonding material under nitrogen atmosphere. For example; MBF90 type (Ni, Co, B, Si) brazing agent (amorphous) produced by Allied in U.S.A. or Japan Amorphous Metal is preferably employed in this brazing.

Advantages of this example are as follows:
(1) The brazing agent is very flexible and easy to handle because it is in a form of metallic foil.
(2) No gas is produced at all during the heating.
(3) Obtained structure is uniform.
(4) Melting is achieved in a short time.

Though the amorphous brazing agent is employed in this example, it is also preferable to use other brazing agent such as known powder paste.

### [Example 4]

In this example, after widening the indent of the core unit by means of an iron disc coated with TiC, a bonding material according to SUS304 of 2mm in thickness and 10mm in width is inserted in the indent.

In this step, it is preferable that an electroless coating film of Ni-P alloy is directly precipitated on the surface of the bonding material to be used as brazing agent. As a result of brazing tests, it was acknowledged that preferable percentage of such precipitation is Ni-97% and P-3%, and film thickness is in the range of 10 to 30 micron.

Then the bonding material is heated to 1200°C under vacuum to melt the brazing agent (Ni-P alloy thick film), whereby the molten brazing agent is deposited between the bonding material and the indent to achieve the brazing. This brazing step is preferably carried out in a vacuum furnace, and it is also preferable to apply a high frequency induction heating to the bonding material under nitrogen atmosphere.

Advantages of this example are as follows:
(1) Since the brazing agent is directly plated on the surface of the bonding material, insertion working is very easy and a highly precise brazing of the bonding material all over the surface can be achieved.
(2) Control of the brazing agent (with plated film) is easy.
(3) Composition of the brazing agent can be freely selected by controlling the conditions of plating solution.
(4) Brazing agents containing Cu, Pb, B, etc. other than the combination of Ni-P are also applicable, and a brazing agent suitable for individual use can be selected among a variety of those agents at reasonable cost.

### [Example 5]

In this example, as shown in Figure 3, a 20Cr-5Al foil of 0.05mm in thickness is formed into a corrugated plate of which inclination is 4°. Then a corrugated plate 50 is combined with another corrugated plate 51 in such a manner that back side of the plate 50 is in contact with front side of the plate 51 thereby their respective corrugations crossing one another to present a combined state 52 as shown in Figure 3(c). Then the combined plates are rolled together to from a multi-layer cylindrical core unit of 80mm in diameter. A slitlike indent of 14mm in depth is formed by means of a diamond grindstone of 0.5mm in thickness and 20mm in diameter starting from the end portion of the core unit. The formed indent is widened with an iron disc of 1.2mm in thickness and coated with TiC, and then a bonding material 23 according to SUS304 of 2mm in thickness and 13mm in width is inserted in the indent in such a manner as to be higher than the end edge of the opening of the core unit by 1mm. Melting of the inserted bonding material 23 is started from this higher part by irradiation with CO₂ laser to deposit the molten bonding material on the core unit provided with the indent.

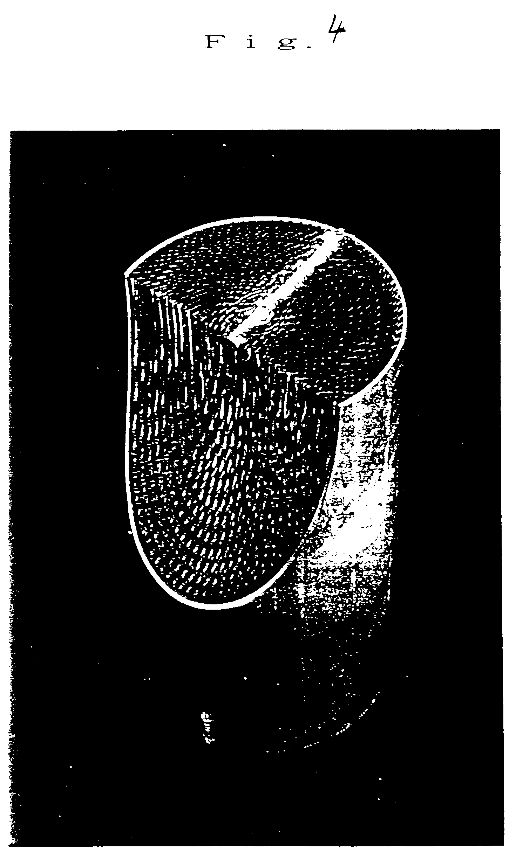

The deposit conditions are 600W in output and 150mm/min. in speed. Figure 4 shows a simulation of an enlarged photograph of the core unit of Example 5 partially cut away with a wire cutter and taken from above.

This cross type honeycomb construction can be obtained not only by this example but also by any other example of the invention.

Advantage of this example is as follows:

In the cross type metallic catalyst support formed by combining corrugated plates of the mentioned inclination, utilization of any joining method including brazing and spot-welding has been heretofore very difficult because every joining face thereof may be very small like a spot. Now this invention has made it possible to put such type of catalyst support into practical use for the first time.

The core unit without bonding material as described above forms a U-shaped bonded portion which is tough enough for practical use, and a more tough bonding state will be achieved when some other bonding material is additionally used.

In another aspect of the invention, it is also preferable that a honeycomb construction is formed by utilizing a thick film bonding material in which thickness of a foil to be used is 10 to 200 times, preferably about 2mm corresponding to 40 times, as thick as the conventional honeycomb construction, instead of forming a core unit of honeycomb construction by directly or indirectly welding or brazing heat resistant metal foils each of 0.05mm in thickness.

Formation of the indent described above is the essential features for embodying the present invention.

Every metallic catalyst support is formed by the steps of directly melting all or any part of the aforementioned bonding materials by applying such energy as CO₂ laser, electron beam and arc thereto, and forming a honeycomb construction utilizing the molten bonding material. Further, every metallic catalyst support is preferably formed by the steps of melting a brazing agent interposed between a bonding material and a core unit, and bonding said bonding material and honeycomb construction together.

More specifically, the indent is advantageous not only for increasing the bonding strength by enlarging the bonding area between the indent and the bonding material but also for effectively preventing the honeycomb constructions from getting out in axial direction by inserting the bonding material of strong bonding force inserted in the indent.

Compression tests were carried out on the core units of honeycomb construction obtained in some of the foregoing examples, and following compressive strength were obtained:

In case of Example 1, the test was carried out on the core unit in which bonding material of 2mm in thickness and 14mm in width was employed. Compressive strength thereof was 2452N (250 (kgf)).

Though specific examples in which welding by CO₂ laser in performed in the foregoing examples, it is also preferable to employ electron beam means in place of CO₂ laser on conditions of 500W in output and 200mm/min. in speed under helium atmosphere.

This electron beam method has an advantage of being almost free from the problem of plasma which is produced and inhibits smooth welding in case of CO₂ laser. Further, though 20Cr-5Al is employed as a material of core unit and a material according to SUS304 is employed as a bonding material in the foregoing examples, the invention is not limited thereto.

As for the bonding material, it is preferable to select a material of sufficient weldability for the honeycomb construction. For instance, known 20Cr-10Ni, (i.e., 308 type), 23Cr-13Ni (i.e., 309 type) are recommendable because they contain an appropriate amount of ferrite in austenite structure and exhibits superior weldability.

It is preferable that predetermined parts or spots on the end face opening of the core unit, i.e., portions for joining the bonding material such as portion on which bonding material is placed in case of Example 1 are pre-heated to near 400°C by high frequency induction heating or the like. By such preheating, the flat plate and corrugated plate forming the core unit come to have a wettability, i.e., weldability with the molten bonding material, and results in exact joining between the bonding material molten with CO₂ laser and the predetermined portions of the core unit.

As for the mentioned honeycomb construction used in the invention, any of such construction already known in the art may be available. Thus, the invention includes every conventionally known heat resistant metal forming the honeycomb construction, foil of such metal, configuration of corrugated plate and flat plate thereof, thickness, pitch, number of required plates, etc. A honeycomb construction containing a core member can be also used in the invention.

The invention further includes the mentioned specific honeycomb constructions such as the one formed by crossing one corrugated plate and another corrugated plate and rolling them together, the one formed by utilizing expanded metal as a flat plate.

Dimensions of the indent formed according to the invention are not particularly defined, but normally they are more or less 1/100 to 1/2, preferably 1/20 to 1/4 of full length of the core unit or 3 to 20cm in length, and 1 to 13mm, preferably 1 to 5mm in width. As for the means for forming the indent, any means can be used in principle as far as a predetermined size of indent can be satisfiably formed, and representative means are those for cutting, welding, and widening, for instance.

As for the cutting means, a disc-shaped cutter or disc rotatable at high speed is preferably employed and, more specifically, grindstone cutter or wire cutter are available, for instance. As for the melting means, the mentioned laser is available. As for the widening means, iron or ceramic disc is available, and water cooling may be useful when required. All of the mentioned means can be operated under normal operating conditions.

In the invention, it is necessary to join at least one part of the indent formed as described above. By such joining, configuration of honeycomb construction is maintained and strength thereof is achieved. Such joining is may be applied to at least one part of the indent. In effect, percentage of joining area is not defined as far as configuration of the honeycomb construction is maintained with sufficient strength. Preferably, about 20% of the indent area is to be joined, and joining full surface of the indent is also permitted as a matter of course.

Joining method is not particularly defined, either. Accordingly, a variety of joining means capable of joining the indent can be employed including the mentioned means using a brazing agent, plasma or TIG welding. In addition, among the mentioned cutting means, the melting method employed for not producing vapor from base material usualy has both of the mentioned means so as to be capable of bonding the cutout portion after cutting.

In the invention, it is necessary to cause forcibly the cutout surface to fall down sideways for the purpose of achieving a so-called lap joint. Such forcible falling down sideways of cutout portion for lap joint may extend all over the cutout portion or partially, and normally 50 to 300%, preferably about 200%. Another purpose of the mentioned forcible falling down sideways of cutout portion exists in that the indent or peripheral edge of the opening are joined together while being in close contact with the bonding material at all times by resiliency as a result of such forcible falling down sideways. As for the means for forcible falling down sideways, ultrasonic vibration or direct press-fitting of bonding material is available other than the mentioned means.

In one aspect of the invention, a bonding material is used as described above. In this manner, the bonding material serves as a so-called insert metal for melting together with base material and forming a solid one unit, and moreover performs a function as a structural member. Other than the mentioned bonding materials, at least one of filler wire or powder-like material may be be applied to all over the indent or any part thereof. Normally, at least 10% of the indent should be applied or filled therewith. In this regard, in case of applying the filler wire or powder to all over the indent or in case that there is no indent, an overlayer is rebuilt thereon, which is one of the preferable features of the invention. Method for filling the filler wire or powder is not particularly defined, but any suitable method can be employed herein.

In the invention, a honeycomb construction having a core member is also preferably used as mentioned above. As for the core member itself, any of the known core members is satisfactorily used. More specifically, a core for winding corrugated and flat plates is preferably used, and shape of the core may be freely choiced among rod-shape, pipe-shape or plate-shape.

As has been described so far, in the present invention, a core unit of honeycomb construction comprising a corrugated plate and a flat plate each of heat resistant metal is formed by rolling or laminating these plate together thereby forming a multi-layer; bonding the rolled or laminated corrugated and flat plates by melting a bonding material itself or a brazing agent coated on the bonding material; and applying the molten material to the indented end face opening of the core unit. This bonding process is quite novel and never has been proposed before.

When employing this novel bonding method, any expensive solder or vacuum furnace is no more necessary, and precise and troublesome spot welding are not required, either, thus a simple and exact bonding being achieved. Furthermore, the mentioned serious problem of getting out of the plate located at the center part of the core unit is now overcome.

Owing to tough joining achieved according to the invention, resistance to high temperature is improved as compared with the prior arts and, as a result, the invention is preferably applied to a manifold catalytic converter installed close to the engine.

The invention is easily applicable to any honeycomb construction in which exact and secure bonding has been considered difficult by any of the known spot welding or laser welding brazing, including a construction formed by crossing and rolling a corrugated plate and another corrugated plate, a construction formed by alternately rolling a flat plate and a corrugated plate using an expanded metal, and any other difficult honeycomb construction, eventually resulting in considerable reduction in cost of metallic catalyst support.

The invention provides means for solution to the serious problems, to which a number of attempts have been heretofore proposed but not satisfiable, concerning the art of how to achieve exact and secure bonding between the honeycomb core unit and outer casing.

Though the foregoing description has mainly treated the core unit of honeycomb construction comprising a corrugated plate and a flat plate each of 20Cr-5Al heat resistant metal of 0.05mm in thickness, properties, number, configuration, and portions to be applied of the bonding material, core member, outer casing and other are not restricted to those specified in the foregoing examples.

When forming such indent, it is also preferable that slit-like cutouts are preliminarily provided at required portions of the corrugated and flat plates, respectively, then the plated are rolled or laminated to form a multi-layer, thereby forming a predetermined continuous indent.

In the invention, the indent of the core unit may be disposed downstream other that upstream of exhaust gas. In case of disposing the indent upstream only, numerical aperture thereof may be reduced, but the reduction ratio remains so small as to be about 7% in the case wherein an indent of 5mm in width is provided at the end face opening of 80mm in diameter. Such a small reduction percentage should be considered rather advantageous in view of improvement of catalyst performance than disadvantageous with reference to the disclosure in Japanese Laid-Open Utility Model Registration Publication (unexamined) No. 35919/1990.

It is a matter of course that the invention is applicable not only to internal combustion engine such as gasoline engine, diesel engine but also to combustion burner and catalyst support for combustion or chemical reaction.

A still further advantage of the invention is to provide a metallic catalyst support obtained by rolling flat and corrugated plates of which surfaces have been already treated, thus a metallic catalyst support in a more completed form being obtained.

The conventional process comprises the steps of rolling flat and/or corrugated plates, inserting the rolled plates in an outer casing to form a core unit, and brazing necessary part or parts to make the core unit complete. Then, the completed core unit is heat-treated, surface-treated to completely form a metallic support in which a catalyst is inserted.

It is to be noted that in the conventional process, the steps of heat treatment or surface treatment are carried out after the brazing step.

When a core unit is dipped in a treatment solution for brazing or sprayed with such solution, the core unit comes to contain the solution like a water-absorbed sponge, and since it is difficult to leave a required amount of the solution while removing the other portion therefrom, it is difficult to achieve a uniform surface treatment.

This difficulty increases in proportion to the increase of viscosity of the treatment solution. Moreover, since this difficult treatment should be applied to one by one resulting in increase in cost. On the other hand, in the present invention, any plate, whether it is a flat plate or corrugated plate, can be first heat-treated and surface-treated in their band state, then they are formed into a core unit by rolling cylindrically, and thereafter an indent is formed on the core unit. And a bonding material is inserted in the indent and molten to obtain a solid one unit. This process according to the invention is feasible because the surface-treated layer stuck to the plate members are removed by grindstone or disc during the step of forming the indent by cutting, whereby the base metal, i.e., metallic catalyst support is exposed, and it is now possible to deposit the molten bonding material on such exposed metal surface of the catalyst support. As a result, a more complete form of metallic catalyst support of uniform surface treated layer can be provided at reasonable cost.

Stainless steel employed as a preferable bonding material is known as one of excellent electrically resistant material. Therefore, by applying an electric current to such stainless steel bonding material serving as a heat generator, a brazing agent combined with the bonding material is molten by heat therefrom to braze the indent of the core unit or peripheral edge of opening.

A bonding material according to SUS304 is preferably used. This bonding material is 72µΩ-cm in electric resistance value and 18.9×10⁻⁶/°C at 650°C in thermal expansion coefficiency. A further bonding material of 20Cr-5Al is 159µΩ-cm at 900°C in electric resistance value, 15.0×10⁻⁶/°C in thermal expansion coefficient, and 1.24% in expansion coefficient.

Since only the bonding material may be heated, there is no need of any large-scaled conventional vacuum furnace consuming a large amount of energy. Only a simple vacuum surface or an atmosphere of nitrogen is required, whereby a heating of high efficiency is achieved in the invention.

B, Si, etc. have been heretofore employed as brazing agent to get a low melting point. A serious problem, however, exists in that for brazing a base material (i.e., core material in this case) in a high temperature range of not lower than 1300°C, the B or Si may be diffused and penetrates into the joint portion of the core unit to occur a so-called erosion, whereby the joint portion is corroded and becomes brittle eventually resulting in breakdown of the joint. In the invention the mentioned brazing temperature is not required to be 1130°C but heating of the bonding material to 1050°C is quite sufficient for necessary diffusion of B or Si, and there is almost no possibility of erosion, thus a tough joint unit of long life being obtained because the bonding material itself is heated and thermally expanded making it possible to perform joining while being in close contact with peripheral edge of the indent or opening.

In the present invention, a flat plate or a corrugated plate can be oxidized and then heated in the presence of Al₂O₃ to produce an Al₂O₃ whisker on a surface of the plate.

A catalyst can be supported more strongly on the plate thus obtained.

## Claims

1. A metallic catalyst support comprising a core unit of honeycomb construction formed by combining a corrugated plate with a flat plate, a corrugated plate with another corrugated plate, or either a corrugated plate or a flat plate with an exhaust passage member, each plate and member being made of a heat resistant metal, and by rolling or laminating them to form a multi-layer; the core unit having an indent in an axial direction across an end face opening of said core unit; characterized in that the plates located at the peripheral edges of said indent are caused to fall down sideways by the application of a load to the indent and a meltable bonding material is inserted in said indent whereby at least those plates located at the peripheral edges of the indent are joined by melting all or any part of said bonding material by a melting means.

2. A metallic catalyst support according to claim 1 wherein the load applied to the indent comprises a rotatable grindstone, and/or a disc.

3. A metallic catalyst support according to claim 1 wherein the load applied to the indent comprises press-fitting of the bonding material into the indent.

4. A metallic catalyst support according to any preceding claim wherein the melting means comprises a laser, electron beam, argon arc or high frequency induction.

5. A metallic catalyst support according to any preceding claim wherein a brazing agent is applied to said bonding material, and at least the plates located at the peripheral edges of the indent are joined by melting said brazing agent.

6. A metallic catalyst support according to any preceding claim wherein the core unit is provided with a core member, the core member being mounted within the core unit in a position whereby at least part of the core member is formed into the indent, and the bonding material inserted in the indent, the core member and the core unit are joined together.

7. A method for manufacturing a metallic catalyst support having a core unit of honeycomb construction made of heat resistant metal comprising the steps of (a) forming a slit-like indent in axial direction of diametral line of an end face opening of a core unit by a cutting means, (b) causing honeycomb portions located at peripheral edge of the indent to fall down sideways by insertion of a meltable bonding material into the indent with or without the application of a load to the indent (c) joining at least the honeycomb portions located at the peripheral edge of said indent by melting all or any part of said bonding material by a melting means.

8. A method for manufacturing a metallic catalyst support according to claim 7 wherein the cutting means comprises a disc grindstone cutter rotatable at high speed or a wire cutter.

9. A method for manufacturing a metallic catalyst support according to claim 7 or 8 wherein the load applied to the indent comprises a rotatable grindstone and/or a disc.

10. A method according to any of claims 7 or 8 wherein the load applied to the indent comprises press-fitting of the bonding material into the indent.

11. A method for manufacturing a metallic catalyst support according to any of claims 7 - 10, wherein the melting means comprises a laser, electron bean, argon arc or high frequency induction heating.

12. A method for manufacturing a metallic catalyst support according to any of claims 7 - 11, wherein said indent of said core unit is filled with at least one filler and said bonding material is bonded to the indent jointly with at least one of said fillers.

13. A method for manufacturing a metallic catalyst support according to Claim 7, wherein said bonding material has a brazing agent formed thereon and being melted by a melting means.

14. A method for manufacturing a metallic catalyst support according to Claim 13, wherein said melting means comprises heating in a vacuum furnace or high frequency induction heating in an inert atmosphere.

15. A method for manufacturing a metallic catalyst support according to Claim 13 or 14, wherein said brazing agent is used in the form of thin film.

16. A method for manufacturing a metallic catalyst support according to Claim 13 or 14, wherein said brazing agent is used in the form of paste.

17. A method for manufacturing a metallic catalyst support according to Claim 13 or 14, wherein said brazing agent is formed on the bonding material by plating.

18. A metallic catalyst support comprising a core unit of honeycomb construction formed by combining a corrugated plate with a flat plate, a corrugated plate with another corrugated plate, or either a corrugated plate or a flat plate with an exhaust passage member, each plate and member being made of a heat resistant metal and by rolling or laminating them to form a multi-layer, the core unit having an indent in axial direction across an end face opening of said core unit; characterised in that the plate located at the peripheral edges of said indent are caused to fall down sideways by the application of a load to the indent and a bonding material having a brazing agent formed thereon is inserted in said indent whereby at least those plates located at the peripheral edges of the indent are joined by melting all or any part of brazing agent formed on said bonding material by a melting means.

## Patentansprüche

1. Metallischer Katalysatorträger umfassend eine Kerneinheit in Wabenbauweise, die gebildet wird, indem eine gewellte Platte mit einer flachen Platte, eine gewellte Platte mit einer anderen gewellten Platte oder aber eine gewellte Platte oder eine flache Platte mit einem Auslaßelement kombiniert wird, wobei jede Platte und das Element aus wärmebeständigem Material hergestellt sind, und diese Teile gewalzt oder mehrschichtig zusammengefügt werden; die Kerneinheit weist dabei eine Kerbe in axialer Richtung quer über eine Öffnung an einer ihrer Stirnseiten auf;
dadurch gekennzeichnet,
daß bei Aufbringung einer Last auf die Kerbe die an deren Umfangsrändern angeordneten Platten seitwärts flachgelegt werden und ein schmelzbares Bindemittel in die Kerbe eingeführt wird, wodurch wenigstens diejenigen Platten, die an den Umfangsrändern der Kerbe angeordnet sind, durch Schmelzen des gesamten oder eines Teils des Bindemittels durch ein Schmelzmittel verbunden werden.

2. Metallischer Katalysatorträger nach Anspruch 1,
dadurch gekennzeichnet,
daß die auf die Kerbe aufgebrachte Last einen drehbaren Schleifstein und/oder eine Scheibe umfaßt.

3. Metallischer Katalysatorträger nach Anspruch 1,
dadurch gekennzeichnet,
daß die auf die Kerbe aufgebrachte Last das Einpressen des Bindemittels in die Kerbe umfaßt.

4. Metallischer Katalysatorträger nach einem der vorangegangenen Ansprüche,
dadurch gekennzeichnet,
daß das Schmelzmittel einen Laserstrahl, Elektronenstrahl, Argonarc oder Hochfrequenzinduktion umfaßt.

5. Metallischer Katalysatorträger nach einem der vorangegangenen Ansprüche,
dadurch gekennzeichnet,
daß dem Bindemittel ein Lötmittel zugeführt wird und daß wenigstens die Platten, die an den Umfangsrändern der Kerbe angeordnet sind, durch Schmelzen des Lötmittels verbunden werden.

6. Metallischer Katalysatorträger nach einem der vorangegangenen Ansprüche,
dadurch gekennzeichnet,
daß die Kerneinheit mit einem Kernelement versehen ist, welches innerhalb der Kerneinheit in einer solchen Position befestigt ist, daß wenigstens ein Teil des Kernelements in die Kerbe hinein geformt wird und daß das in die Kerbe eingeführte Bindemittel, das Kernelement und die Kerneinheit miteinander verbunden werden.

7. Verfahren zur Herstellung eines metallischen Katalysatorträgers mit einer Kerneinheit in Wabenbauweise, die aus wärmebeständigem Metall hergestellt ist, wobei das Verfahren die folgenden Schritte umfaßt: (a) Bildung einer schlitzähnlichen Kerbe in axialer Richtung einer diametralen Linie auf einer stirnseitigen Öffnung einer Kerneinheit durch ein Schneidelement, (b) Bewirken, daß Abschnitte in Wabenbauweise, die am Umfangsrand der Kerbe angeordnet sind, seitwärts flachgelegt werden, indem ein schmelzbares Bindemittel in die Kerbe eingeführt wird, mit oder ohne Aufbringung einer Last auf die Kerbe, (c) Verbinden wenigstens der Abschnitte in Wabenbauweise, die am Umfangsrand der Kerbe angeordnet sind, durch Schmelzen des gesamten oder eines Teils des Bindemittels durch ein Schmelzmittel.

8. Verfahren zur Herstellung eines metallischen Katalysatorträgers nach Anspruch 7,
dadurch gekennzeichnet,
daß das Schneidelement einen bei hoher Geschwindigkeit drehbaren Abrichtschleifschneider oder einen Drahtschneider umfaßt.

9. Verfahren zur Herstellung eines metallischen Katalysatorträgers nach Anspruch 7 oder 8,
dadurch gekennzeichnet,
daß die auf die Kerbe aufgebrachte Last einen drehbaren Schleifstein und/oder eine Scheibe umfaßt.

10. Verfahren nach Anspruch 7 oder 8,
dadurch gekennzeichnet,
daß die auf die Kerbe aufgebrachte Last das Einpressen des Bindemittels in die Kerbe umfaßt.

11. Verfahren zur Herstellung eines metallischen Katalysatorträgers nach den Ansprüchen 7 bis 10,
dadurch gekennzeichnet,
daß das Schmelzmittel einen Laserstrahl, Elektronenstrahl, Argonarc oder Hochfrequenzinduktion umfaßt.

12. Verfahren zur Herstellung eines metallischen Katalysatorträgers nach einem der Ansprüche 7 bis 11,
dadurch gekennzeichnet,
daß die Kerbe der Kerneinheit mit wenigstens einem Füllstoff gefüllt wird und das Bindemittel zusammen mit wenigstens einem Füllstoff mit der Kerbe verbunden wird.

13. Verfahren zur Herstellung eines metallischen Katalysatorträgers nach Anspruch 7,
dadurch gekennzeichnet,
daß das Bindemittel ein auf ihm gebildetes Lötmittel umfaßt, das durch ein Schmelzmittel geschmolzen wird.

14. Verfahren zur Herstellung eines metallischen Katalysatorträgers nach Anspruch 13,
dadurch gekennzeichnet,
daß das Schmelzmittel die Erwärmung in einem Vakuumofen oder Hochfrequenzerwärmung in einer trägen Atmosphäre umfaßt.

15. Verfahren zur Herstellung eines metallischen Katalysatorträgers nach Anspruch 13 oder 14,
dadurch gekennzeichnet,
daß das Lötmittel in Form eines dünnen Films verwendet wird.

16. Verfahren zur Herstellung eines metallischen Katalysatorträgers nach Anspruch 13 oder 14,
dadurch gekennzeichnet,
daß das Lötmittel in Form von Paste verwendet wird.

17. Verfahren zur Herstellung eines metallischen Katalysatorträgers nach Anspruch 13 oder 14,
dadurch gekennzeichnet,
daß das Lötmittel auf dem Bindemittel durch Plattieren gebildet wird.

18. Metallischer Katalysatorträger umfassend eine Kerneinheit in Wabenbauweise, die gebildet wird, indem eine gewellte Platte mit einer flachen Platte, eine gewellte Platte mit einer anderen gewellten Platte oder aber eine gewellte Platte oder eine flache Platte mit einem Auslaßelement kombiniert wird, wobei jede Platte und das Element aus wärmebeständigem Material hergestellt sind, und diese Teile gewalzt oder mehrschichtig zusammengefügt werden, wobei die Kerneinheit eine Kerbe in axialer Richtung quer über eine Öffnung an einer ihrer Stirnseiten aufweist;
dadurch gekennzeichnet,
daß bei Aufbringung einer Last auf die Kerbe die an deren Umfangsrändern angeordneten Platten seitwärts flachgelegt werden und ein Bindemittel mit einem auf ihm gebildeten Lötmittel in die Kerbe eingeführt wird, wodurch wenigstens diejenigen Platten, die an den Umfangsrändern der Kerbe angeordnet sind, durch Schmelzen des gesamten oder eines Teils des auf dem Bindemittel gebildeten Lötmittels durch ein Schmelzmittel verbunden werden.

## Revendications

1. Support métallique de catalyseur comprenant un bloc de coeur en nid d'abeilles formé par combinaison d'une plaque ondulée avec une plaque plate, d'une plaque ondulée avec une autre plaque ondulée ou d'une plaque ondulée ou bien d'une plaque plate avec un élément de passage d'échappement, chaque plaque et chaque élément étant un métal résistant à la chaleur et formés par laminage ou stratification de ceux-ci pour la formation d'un ensemble multicouche, le bloc de coeur ayant une entaille dans une direction axiale en travers d'un orifice de face d'extrémité, caractérisé par le fait que les plaques situées aux bords périphériques de l'entaille chutent de côté par application d'une charge à l'entaille et une matière fusible de liaison est introduite dans l'entaille pour qu'au moins les plaques situées aux bords périphériques de l'entaille soient jointes par fusion par un moyen de fusion de tout ou partie de la matière de liaison.

2. Support métallique de catalyseur selon la revendication 1, dans lequel la charge appliquée à l'entaille comprend une meule tournante et/ou un disque.

3. Support métallique de catalyseur selon la revendication 1, dans lequel la charge appliquée à l'entaille comprend l'enfoncement de force de la matière de liaison dans l'entaille.

4. Support métallique de catalyseur selon l'une des revendications précédentes, dans lequel le moyen de fusion comprend un laser, un faisceau électronique, un arc sous argon ou une induction à haute fréquence.

5. Support métallique de catalyseur selon l'une des revendications précédentes, dans lequel un agent de brasage est appliqué sur la matière de liaison et au moins les plaques situées aux bords périphériques de l'entaille sont jointes par fusion de cet agent de brasage.

6. Support métallique de catalyseur selon l'une des revendications précédentes, dans lequel le bloc de coeur est pourvu d'un élément de coeur, cet élément de coeur étant monté dans le bloc de coeur dans une position telle qu'au moins une partie de l'élément de coeur soit formée dans l'entaille et la matière de liaison introduite dans l'entaille, l'élément de coeur et le bloc de coeur soient joints ensemble.

7. Procédé de fabrication d'un support métallique de catalyseur ayant un bloc de coeur en nid d'abeille fait de métal résistant à la chaleur, comprenant les opérations de (a) formation par un moyen de coupe d'une entaille du genre fente dans la direction axiale d'un diamètre d'un orifice de face d'extrémité d'un bloc de coeur, (b) chutage de côté de parties en nid d'abeille situées au bord périphérique de l'entaille par introduction d'une matière fusible de liaison dans l'entaille avec ou sans application d'une charge à l'entaille, (c) jonction d'au moins les parties en nid d'abeille situées au bord périphérique de l'entaille par fusion par un moyen de fusion de tout ou partie de la matière de liaison.

8. Procédé de fabrication d'un support métallique de catalyseur selon la revendication 7, dans lequel le moyen de coupe comprend une meule tournant à grande vitesse ou un fil coupant.

9. Procédé de fabrication d'un support métallique de catalyseur selon l'une des revendications 7 et 8, dans lequel la charge appliquée à l'entaille comprend une meule tournante et/ou un disque.

10. Procédé selon l'une des revendications 7 et 8, dans lequel la charge appliquée à l'entaille comprend l'enfoncement de force de la matière de liaison dans l'entaille.

11. Procédé de fabrication d'un support métallique de catalyseur selon l'une des revendications 7 à 10, dans lequel le moyen de fusion comprend un laser, un faisceau électronique, un arc sous argon ou un chauffage par induction à haute fréquence.

12. Procédé de fabrication d'un support métallique de catalyseur selon l'une des revendications 7 à 11, dans lequel l'entaille du bloc de coeur est remplie d'au moins une matière de remplissage et la matière de liaison est unie à l'entaille conjointement avec au moins une des matières de remplissage.

13. Procédé de fabrication d'un support métallique de catalyseur selon la revendication 7, dans lequel un agent de brasage est formé sur la matière de liaison et fondu par un moyen de fusion.

14. Procédé de fabrication d'un support métallique de catalyseur selon la revendication 13, dans lequel le moyen de fusion comprend le chauffage dans un four à vide ou le chauffage par induction à haute fréquence dans une atmosphère inerte.

15. Procédé de fabrication d'un support métallique de catalyseur selon l'une des revendications 13 et 14, dans lequel l'agent de brasage est utilisé sous forme de pellicule mince.

16. Procédé de fabrication d'un support métallique de catalyseur selon l'une des revendications 13 et 14, dans lequel l'agent de brasage est utilisé sous forme de pâte.

17. Procédé de fabrication d'un support métallique de catalyseur selon l'une des revendications 13 et 14, dans lequel l'agent de brasage est formé sur la matière de liaison par placage.

18. Support métallique de catalyseur comprenant un bloc de coeur en nid d'abeilles formé par combinaison d'une plaque ondulée avec une plaque plate, d'une plaque ondulée avec une autre plaque ondulée ou bien d'une plaque ondulée ou d'une plaque plate avec un élément de passage d'échappement, chaque plaque et chaque élément étant un métal résistant à la chaleur et formés par laminage ou stratification de ceux-ci pour la formation d'un ensemble multicouche, le bloc de coeur ayant une entaille dans une direction axiale en travers d'un orifice de face d'extrémité, caractérisé par le fait que les plaques situées aux bords périphériques de l'entaille chutent de côté par application d'une charge à l'entaille et une matière de liaison sur laquelle est formé un agent de brasage est introduite dans l'entaille pour qu'au moins les plaques situées aux bords périphériques de l'entaille soient jointes par fusion par un moyen de fusion de tout ou partie de l'agent de brasage formé sur la matière de liaison.
